Europäisches Patentamt

European Patent Office

Office européen des brevets

(11) Publication number: **0 333 401 B1**

# EUROPEAN PATENT SPECIFICATION

(45) Date of publication of patent specification: **07.12.94**   (51) Int. Cl.⁵: **B29C  49/00**, B29B 13/08

(21) Application number: **89302437.2**

(22) Date of filing: **13.03.89**

(54) **Process for forming container of acrylonitrile polymers by biaxial-orientation blow-moulding preform.**

(30) Priority: **15.03.88 JP 61316/88**

(43) Date of publication of application:
**20.09.89 Bulletin  89/38**

(45) Publication of the grant of the patent:
**07.12.94 Bulletin  94/49**

(84) Designated Contracting States:
**AT BE CH DE ES FR GB IT LI NL**

(56) References cited:
**EP-A- 0 002 121**
**EP-A- 0 018 058**
**GB-A- 2 006 225**
**US-A- 4 196 111**

(73) Proprietor: **Japan Atomic Energy Research Institute**
**2-2, Uchisaiwaicho 2-chome**
**Chiyoda-ku, Tokyo (JP)**

Proprietor: **Yoshino Kogyosho Co., Ltd.**
**No. 2-6, Ojima 3-chome,**
**Koto-ku**
**Tokyo 136 (JP)**

(72) Inventor: **Ishigaki, Isao Takasaki Radiation**
**Chem.**
**Atomic Energy Res. Inst.**
**No. 1233 Watanuki-Machi**
**Takasaki-Shi Gunma-Ken (JP)**
Inventor: **Makuuchi, Keizo Takasaki Radiation**
**Chem.**
**Atomic Energy Res. Inst.**
**No. 1233 Watanuki-Machi**
**Takasaki-Shi Gunma-Ken (JP)**
Inventor: **Yoshii, Fumio Takasaki Radiation**
**Chem.**
**Atomic Energy Res. Inst.**
**No. 1233 Watanuki-Machi**
**Takasaki-Shi Gunma-Ken (JP)**
Inventor: **Kushida, Hideo**
**Yoshino Kogyosho Co., Ltd.**
**No. 2-6, Ojima 3-Chome**
**Koto-ku Tokyo (JP)**
Inventor: **Hiroshi, Iida**
**Yoshino Kogyosho Co., Ltd.**
**No. 2-6, Ojima 3-Chome**
**Koto-ku Tokyo (JP)**
Inventor: **Owada, Toyokazu**
**Yoshino Kogyosho Co., Ltd.**
**No. 2-6, Ojima 3-Chome**
**Koto-ku Tokyo (JP)**

(74) Representative: **Heath, Derek James et al**
**BROMHEAD & CO.**
**19 Buckingham Street**
**London WC2N 6EF (GB)**

**Description**

The present invention relates to a process of forming a container by biaxial-orientation blow-moulding a cylindrical shaped preform of thermoplastic resin mainly comprising acrylonitrile polymers.

A container obtained by biaxial-orientation blow-moulding a cylindrical shaped preform of thermoplastic resin mainly comprising acrylonitrile polymers provides an excellent gas barrier, permeability, light weight and stability against a number of kinds of solvents. Accordingly, such a container is widely utilized for holding, for example, food, medicines, toiletries and the like.

Acrylonitrile polymers which are to be moulded contain trace amounts of residual acrylonitrile monomer. The trace amounts of unpolymerized acrylonitrile monomer are produced in the steps of moulding and heating the preform to form the container. Accordingly, the residual acrylonitrile monomer is also contained in the blow-moulded container.

JP-B-56-54321 and JP-A-54-148059 disclose a method of reducing the residual acrylonitrile monomer in a preform of thermoplastic resin mainly comprising acrylonitrile polymers by irradiating the preform with an electron beam.

The method of reducing the residual acrylonitrile monomer in the preform by irradiating the preform with the electron beam has a disadvaqntage that HCN is by-produced by the electron beam irradiation. Therefore, this method cannot provide a container made of acrylonitrile resin having excellent sanitary properties.

Accordingly, it is a main aim of the present invention to provide a process for forming a container of acrylonitrile polymers in which the content of residual acrylonitrile monomer and the by-produced HCN are minimised in the blow-moulded container so as to provide the container of acrylonitrile resin having excellent sanitary properties.

In order to achieve the above and other aims, the present invention is directed to a process for forming a container of acrylonitrile polymers by biaxial-orientation blow-moulding a preform, comprising the steps of :

irradiating a preform of thermoplastic resin mainly comprising acrylonitrile polymers with an electron beam or gamma-rays to reduce residual acrylonitrile monomer in the preform; and then biaxial-orientation blow-moulding the preform to form the container of acrylonitrile polymers, characterised in

further reducing residual acrylonitrile monomer in the preform to 0.1 ppm or less by heating the preform to 40°C or higher immediately after the irradiation.

Further advantageous steps of the present invention are laid out in sub-claims 2 to 12.

According to the process of the present invention, there is provided a container having excellent sanitary properties in which the residual acrylonitrile monomer in the blow-moulded container is reduced to 0.1 ppm or less and the extracted amount of by-produced HCN is depressed to its detection limit or less. The "detection limit or less" of the extraction amount of the HCN means that the extracted amount of HCN is 10 ppb or less by a detecting method according to the WATER SUPPLY LAW (Japanese law).

In the process of the present invention, a preform of thermoplastic resin mainly comprising acrylonitrile polymers to be blow-moulded has a bottom and a cylindrical shape. The preform has known structure which is same as that of an ordinary preform used to be biaxial-orientation blow-moulded. The acrylonitrile polymers normally utilized in the present process contain 55 to 85 wt.% of nitrile monomer calculated as acrylonitrile. An average wall thickness of the preform is preferably 1.0 to 8.0 mm.

In the present invention, the unpolymerized acrylonitrile monomer in the preform is polymerized and the content of HCN by-product in the preform is minimised as much as possible by irradiating the preform with the electron beam or the gamma-rays. Accordingly, in order to reduce the content of the HCN by-product as much as possible, an absorption dose of the electron beam is low in value, for example, 0.1 to 8.0 kGy, and a radiation dose of the gamma-rays is low in value, for example, 0.1 to 8.0 kGy. In order to accelerate the polymerization of the residual acrylonitrile monomer in the preform, immediately after the irradiation of the electron beam or the gamma-rays, the preform is heated to 40°C or higher to obtain a preform having 0.1 ppm or less of the unpolymerized acrylonitrile monomer. The preform is heated, for example, by hot air, radio frequency, induction, far infrared ray or near infrared ray, or two or more thereof in combination. The preform may be heated to 165°C or lower.

When the preform is made of thermoplastic resin which contains formaldehyde compounds, the extractable amount of HCN in the blow-moulded container is further reduced by the irradiation of a low dose of electron beam or gamma-rays and the reaction with the formaldehyde compounds.

The preform may contain dispersant and/or antioxidant.

3

EXAMPLES

EXAMPLE 1

A mixture was injection moulded to form a preform. The mixture comprises 100 parts by weight of acrylonitrile-styrene copolymer (68.0 wt.% of acrylonitrile monomer unit content), 0.15 parts by weight of condensation of paratoluenesulphonylamide-formaldehyde (Santolite MHP, trade name of Monsanto Company), 0.125 parts by weight of 2,6-di-t-butyl-p-cresol (BHT, trade name of Ashland Chemical Company), and 0.05 parts by weight of dispersant (Aldosperse TS-40, trade name of Glyco Chemicals Company). The preform had a bottom, cylindrical shape, approx. 30 mm of diameter of a neck, approx. 160 mm of length and approx. 4.5 mm of average wall thickness. The neck had the same construction as that of a neck of a biaxial-orientation blow-moulded container. The amount of the residual acrylonitrile monomer in the preform was 9.0 ppm.

Then, while the preform was being rotated around its long axis direction, the preform was irradiated with an electron beam of 0.25 megarad by an electron accelerator of 3 MeV of acceleration voltage. Immediately after the irradiation, the preform was heated by hot air at 90°C for 30 min.

Then, the preform was biaxial-orientation blow-moulded at 140 °C of orientation temperature, to obtain a container (i) having a volume of 600 ml.

EXAMPLE 2

The same mixture as that of the EXAMPLE 1 was injection moulded to obtain a preform which had a bottom, cylindrical shape, approx. 30 mm of diameter of a neck, approx. 160 mm of length and approx. 4.5 mm of average wall thickness. The neck had the same structure as that of a neck of a biaxial-orientation blow-moulded container. The amount of the unpolymerized acrylonitrile monomer in the preform was 7.6 ppm.

Then, while the preform was being rotated around its long axis direction, the preform was irradiated with an electron beam of 2.0 kGy by an electron accelerator of 3 MeV of acceleration voltage. Immediately after the irradiation, the preform was heated by radio frequency heating and further hot air at 100°C for 5 min.

Subsequently, the preform was biaxial-orientation blow-moulded at 140°C of orientation temperature, to obtain a container (ii) having a volume of 600 ml.

EXAMPLE 3

The same mixture as that of the EXAMPLE 1 was injection moulded to obtain a preform which had a bottom, cylindrical shape, approx. 30 mm of diameter of a neck, approx. 160 mm of length and approx. 4.5 mm of average wall thickness. The neck had the same structure as that of a neck of the container. The amount of the residual acrylonitrile monomer in the preform was 6.4 ppm.

Then, while the preform was being rotated around its long axis direction, the preform was irradiated with an electron beam of 2.0 kGy by an electron beam irradiating apparatus of 3 MeV of acceleration voltage. Immediately after the irradiation, the preform was heated by hot air at 90°C for 30 min.

Subsequently, the preform was biaxial-orientation blow-moulded at 140°C of orientation temperature, to obtain a container (iii) having a volume of 2500 ml.

EXAMPLE 4

The same mixture as that of the EXAMPLE 1 was injection moulded to obtain a preform which had a bottom, cylindrical shape, approx. 30 mm of diameter of a neck, approx. 160 mm of length and approx. 4.5 mm of average wall thickness. The neck had the same structure as that of a neck of the biaxial-orientation blow-moulded container The amount of the residual acrylonitrile monomer in the preform was 7.6 ppm.

Then, while the preform was being rotated around its long axis direction, the preform was irradiated with a gamma-ray of 1.5 kGy. Immediately after the irradiation, the preform was heated by hot air at 90°C for 30 min.

Subsequently, the preform was biaxial-orientation blow-moulded at 140°C of orientation temperature, to obtain a container (iv) having a volume of 600 ml.

4

COMPARISON EXAMPLE 1

The same mixture as that of the EXAMPLE 1 was injection moulded to obtain a preform which had a bottom, cylindrical shape, approx. 30 mm of diameter of a neck, approx. 160 mm of length and approx. 4.5 mm of average wall thickness. The neck had the same structure as that of a neck of a biaxially-orientation blow-moulded container. The amount of the residual acrylonitrile monomer in the preform was 3.2 ppm.

Then, while the preform was being rotated around its long axis direction, the preform was irradiated with an electron beam of 1.5 kGy by an electron accelerator of 3 MeV of acceleration voltage. Then the preform was biaxial-orientation blow-moulded at 140°C of orientation temperature to obtain a container (I) having a volume of 600 ml.

COMPARISON EXAMPLE 2

The same mixture as that of the EXAMPLE 1 was injection moulded to obtain a preform which had a bottom, cylindrical shape, approx. 30 mm of diameter of a neck, approx. 160 mm of length and approx. 4.5 mm of average wall thickness. The neck had the same structure as that, of a neck of a biaxially-oriented blow-moulded container. The amount of the unpolymerized acrylonitrile monomer in the preform was 13.2 ppm.

Then, while the preform was being rotated around its long axis direction, the preform was irradiated with an electron beam of 1.0 kGy by an electron beam irradiating apparatus of 3 MeV of acceleration voltage. Immediately after the irradiation, the preform was heated by hot air at 90°C for 30 min.

Subsequently, the heated preform was biaxial-orientation blow-moulded at 140°C of orientation temperature, to obtain a container (II) having a volume of 600 ml.

Because the dose of the electron beam which irradiated the preform prior to the biaxial-orientation blow-moulding was insufficient in this COMPARISON EXAMPLE 2, the amount of the residual acrylonitrile monomer remaining in the preform to be blow-moulded was not satisfy the condition specified by the present invention.

The table described below indicates the amounts of the residual acrylonitrile monomer in the preforms to be blow-moulded, the average wall thicknesses of the blow-moulded containers, $O_2$ gas barrier (permeability) of the containers, the amounts of the residual acrylonitrile monomers in the blow-moulded containers and extracted amount of HCN from the containers in the EXAMPLES and the COMPARISON EXAMPLES.

The amounts of HCN extracted from the containers were obtained by heating a solution for impregnation as a solute test, made of 20% of alcohol, to 60°C; filling the solution to predetermined level in the respective containers; sealing the containers; and allowing the containers to stand in atmospheric pressure at 60°C for 30 min. to then extract the HCN.

5

| Example Nos. | Example 1 | Example 2 | Example 3 | Example 4 | Comparison Example 1 | Comparison Example 2 |
|---|---|---|---|---|---|---|
| Residual acrylonitrile monomer in preform | <0.1 | <0.1 | <0.1 | <0.1 | 0.75 | 1.60 |
| Type of container | i | ii | iii | iv | I | II |
| Containers Average wall thickness (mm) | 0.87 | 0.86 | 1.08 | 0.87 | 0.91 | 0.89 |
| Oxygen permeability (cc/day) | 0.006 | 0.006 | 0.013 | 0.006 | 0.006 | 0.006 |
| Acrylonitrile monomer (ppm) | <0.1 | <0.1 | <0.1 | <0.1 | 0.72 | 1.40 |
| Extracted HCN (ppb) | ND | ND | ND | ND | ND | ND |

"ND: Detecting limit or less"

As described above, in the process of the present invention, the preform of thermoplastic resin mainly comprising acrylonitrile resin is irradiated with the electron beam or the gamma-rays; immediately after the irradiation, heated to 40°C or higher to reduce the unpolymerized acrylonitrile monomer in the preform to 0.1 ppm or less; and then biaxial-orientation blow-moulded to form the container.

6

In the process of the invention, the dose of the electron beam or the gamma-rays to be irradiated to the preform is reduced to suppress the by-production of HCN. The amount of the residual acrylonitrile monomer still remaining in the preform due to the suppression of the dose of the irradiated electron beam or the gamma-rays is further reduced by heating the preform subsequent to the irradiation of the electron beam or the gamma-rays.

Therefore, according to the process of the invention, there is provided a biaxial-orientation blow-moulded container having excellent sanitary properties (the residual acrylonitrile monomer in the blow-moulded container is 0.1 ppm or less and the extracted amount of the by-produced HCN is less than the detecting limit) in addition to preferable properties of conventional container made of acrylonitrile, such as excellent gas barrier, permeability, light weight and stability against a number of solvents. Therefore, the container formed by the process of the present invention can be utilized for holding food, medicine, toiletries and the like.

**Claims**

1. A process for forming a container of acrylonitrile polymers by biaxial-orientation blow-moulding a preform, comprising the steps of :
   irradiating a preform of thermoplastic resin mainly comprising acrylonitrile polymers with an electron beam or gamma-rays to reduce residual acrylonitrile monomer in the preform; and then biaxial-orientation blow-moulding the preform to form the container of acrylonitrile polymers, characterised in
   further reducing residual acrylonitrile monomer in the preform to 0.1 ppm or less by heating the preform to 40°C or higher immediately after the irradiation.

2. A process according to claim 1, characterised in that an absorption dose of the electron beam is in the range 0.1 to 8.0 kGy.

3. A process according to claim 1, characterised in that a radiation dose of the gamma-rays is in the range 0.1 to 8.0 kGy.

4. A process according to any preceding claim, characterised in that the acrylonitrile polymers contain 55 to 85 wt.% of nitrile monomer calculated as acrylonitrile.

5. A process according to any preceding claim, characterised in that an average wall thickness of the preform is 1.0 to 8.0 mm.

6. A process according to any preceding claim, characterised in that the preform is heated by hot air, radio frequency, induction, far infrared ray or near infrared ray, or two or more thereof in combination to 40°C or higher.

7. A process according to any preceding claim, characterised in that an amount of the residual acrylonitrile monomer in the preform to be irradiated by the electron beam or the gamma-rays is 30 ppm or less.

8. A process according to any preceding claim, characterised in that the thermoplastic resin contains formaldehyde compounds.

9. A process according to claim 4, characterized in that the preform contains dispersant.

10. A process according to claim 4, characterized in that the preform contains antioxidant.

11. A process according to any preceding claim, characterized in that the preform is irradiated with the electron beam or the gamma-rays while the preform is rotated around its long axis direction.

12. A process according to any preceding claim, characterized in the the preform is heated to 165°C or lower.

**Patentansprüche**

1.  Verfahren zur Herstellung eines Behälters aus Acrylnitrilpolymeren durch biaxial-orientiertes Blasformen eines Vorformlings, wobei man:
    einen Vorformling aus thermoplastischem Harz aus hauptsächlich Acrylnitrilpolymeren mit einem Elektronenstrahl oder gamma-Strahlen bestrahlt, um restliches Acrylnitril-Monomer im Vorformling herabzusetzen, und dann den Vorformling biaxialorientiert blasformt, um einen Behälter aus Acrylnitril-Polymeren zu bilden,
    dadurch **gekennzeichnet**, daß man
    das restliche Acrylnitril-Monomer im Vorformling auf 0,1 ppm oder Weniger weiter herabsetzt, indem man den Vorformling auf 40 °C oder höher sofort nach der Bestrahlung erhitzt.

2.  Verfahren gemäß Anspruch 1,
    dadurch **gekennzeichnet**, daß
    die Absorptionsdosis des Elektronenstrahls im Bereich von 0,1 bis 8,0 kGy liegt.

3.  Verfahren gemäß Anspruch 1,
    dadurch **gekennzeichnet**, daß
    die Bestrahlungsdosis der gamma-Strahlen im Bereich von 0,1 bis 8,0 kGy liegt.

4.  Verfahren gemäß jedem vorhergehenden Anspruch,
    dadurch **gekennzeichnet**, daß
    die Acrylnitrilpolymeren 55 bis 85 Gew.% Nitril-Monomer, berechnet als Acrylnitril, enthalten.

5.  Verfahren gemäß jedem vorhergehenden Anspruch,
    dadurch **gekennzeichnet**, daß
    die Durchschnittswandstärke des Vorformlings 1,0 bis 8,0 mm beträgt.

6.  Verfahren gemäß jedem vorhergehenden Anspruch,
    dadurch **gekennzeichnet**, daß
    der Vorformling durch Heißluft, Radiofrequenz, Induktion, fernes oder nahes Infrarotlicht oder durch zwei oder mehrere davon in Kombination auf 40 °C oder höher erhitzt wird.

7.  Verfahren gemäß jedem vorhergehenden Anspruch,
    dadurch **gekennzeichnet**, daß
    die Menge des restlichen Acrylnitril-Monomers im Vorformling, der mit dem Elektronenstrahl oder den gamma-Strahlen bestrahlt werden soll, 30 ppm oder weniger beträgt.

8.  Verfahren gemäß jedem vorhergehenden Anspruch,
    dadurch **gekennzeichnet**, daß
    das thermoplastische Harz Formaldehydverbindungen enthält.

9.  Verfahren gemäß Anspruch 4,
    dadurch **gekennzeichnet**, daß
    der Vorformling ein Dispergiermittel enthält.

10. Verfahren gemäß Anspruch 4,
    dadurch **gekennzeichnet**, daß
    der Vorformling ein Antioxidans enthält.

11. Verfahren gemäß jedem vorhergehenden Anspruch,
    dadurch **gekennzeichnet**, daß
    der Vorformling mit dem Elektronenstrahl oder den gamma-Strahlen bestrahlt wird, wobei der Vorformling um seine Längsachsenrichtung rotiert wird.

12. Verfahren gemäß jedem vorhergehenden Anspruch,
    dadurch **gekennzeichnet**, daß
    der Vorformling auf 165 °C oder weniger erhitzt wird.

**Revendications**

1. Procédé pour former un récipient constitué de polymères d'acrylonitrile par moulage par soufflage avec orientation biaxiale d'une préforme, comprenant les étapes :

   d'irradiation d'une préforme constituée d'une résine thermoplastique comprenant principalement des polymères d'acrylonitrile avec un faisceau d'électrons ou des rayons gamma pour réduire la teneur en monomère acrylonitrile résiduel dans la préforme ; puis de moulage par soufflage avec orientation biaxiale de la préforme pour former le récipient constitué de polymères d'acrylonitrile, caractérisé par

   la réduction supplémentaire de la teneur en monomère acrylonitrile résiduel dans la préforme à une valeur égale ou inférieure à 0,1 ppm par chauffage de la préforme à une température égale ou supérieure à 40°C immédiatement après irradiation.

2. Procédé suivant la revendication 1, caractérisé en ce que la dose d'absorption du faisceau d'électrons est comprise dans l'intervalle de 0,1 à 8,0 kGy.

3. Procédé suivant la revendication 1, caractérisé en ce que la dose d'irradiation avec les rayons gamma est comprise dans l'intervalle de 0,1 à 8,0 kGy.

4. Procédé suivant l'une quelconque des revendications précédentes, caractérisé en ce que les polymères d'acrylonitrile contiennent 55 à 85 % en poids de monomère nitrile, le calcul étant effectué sur la base de l'acrylonitrile.

5. Procédé suivant l'une quelconque des revendications précédentes, caractérisé en ce que l'épaisseur moyenne de paroi de la préforme va de 1,0 à 8,0 mm.

6. Procédé suivant l'une quelconque des revendications précédentes, caractérisé en ce que la préforme est chauffée par de l'air chaud, par radiofréquence, par induction, par un rayonnement infrarouge lointain ou un rayonnement infrarouge proche, ou par deux ou plus de deux de ces moyens en association, à une température égale ou supérieure à 40°C.

7. Procédé suivant l'une quelconque des revendications précédentes, caractérisé en ce que la quantité du monomère acrylonitrile résiduel dans la préforme à irradier par le faisceau d'électrons ou les rayons gamma est égale ou inférieure à 30 ppm.

8. Procédé suivant l'une quelconque des revendications précédentes, caractérisé en ce que la résine thermoplastique contient des dérivés de formaldéhyde.

9. Procédé suivant la revendication 4, caractérisé en ce que la préforme contient un dispersant.

10. Procédé suivant la revendication 4, caractérisé en ce que la préforme contient un antioxydant.

11. Procédé suivant l'une quelconque des revendications précédentes, caractérisé en ce que la préforme est irradiée avec le faisceau d'électrons ou les rayons gamma tout en étant soumise à une rotation autour de la direction de son grand axe.

12. Procédé suivant l'une quelconque des revendications précédentes, caractérisé en ce que la préforme est chauffée à une température égale ou inférieure à 165°C.